# EUROPEAN PATENT APPLICATION

(11) **EP 4 047 773 A1**
(43) Date of publication of application: **24.08.2022**
(21) Application number: 21157929.7
(22) Date of filing: 18.02.2021
(51) Int. Cl.: H02J 3/14, H02J 13/00

(54) **ENERGY MANAGEMENT SYSTEM**

(71) Applicant: Grosjean, Stefan, 8500 Kortrijk (BE)
(72) Inventor: Grosjean, Stefan, 8500 Kortrijk (BE)
(74) Representative: BiiP cvba

(57) **Abstract**

The present invention is directed to an energy management system the present invention is directed to an energy management system comprising:
a. at least one submetering and communication module, said module comprising:
i. a submetering unit capable of metering appliance related power consumption parameters related to an electr(on)ic appliance; and
ii. a first communication interface for communicating said appliance related power consumption parameters with a server;

b. a first processing unit capable of processing said appliance related power consumption parameters and providing a sub-set of power consumption parameters;
c. a main metering unit capable of metering main power consumption parameters related to a main electricity cable;
d. a second communication interface for communicating said main power consumption parameters with said server,
e. a second processing unit capable of processing said main power consumption parameters and providing a main set of power consumption parameters;
characterized in that it further comprises a third processing unit for correlating said sub-set with said main set and validating the presence of said sub-set in said main set.

Further, the present invention relates to a submetering module for use in such energy management system. In addition, the present invention also relates to a virtual power plant comprising such energy management system.

## Description

### FIELD OF THE INVENTION

The present invention relates to an energy management system for monitoring electr(on)ic appliances. Further, the present invention relates to a submetering module for use in such energy management system. In addition, the present invention also relates to a virtual power plant comprising such energy management system.

### BACKGROUND OF THE INVENTION

Today electrical energy is still a form of energy is generated, distributed, and consumed immediately. When the load on the power grid approaches the maximum capacity, network operators must either find additional supplies of energy or find ways to manage the load in order to avoid grid overloading.

In addition, due to environmental concerns, power generation is shifting from traditional fossil-fuel resources to renewable energy such as wind, solar and geothermal, energy. Electricity production of some these technologies is location specific and/or dependent on weather conditions, such that production is not constant and not always predictable as well, such that efficient grid load management becomes even more important to avoid overloading.

One form of grid load management is long-term load management taking in account long-term load behavior and long-term scenarios that account for weather forecasts, the predicted impact of daily peak consumption, yearly peak consumption etc.

Another form of load management builds on storage systems for example to store the excess of production from solar plants and make this energy available for later use. Today, however, this option is costly and often has a long payback period.

However, key to achieving a next level of efficient grid load management is involving metering, monitoring domestic and commercial energy use, and controlling and adjusting where required. For example, an option may be to reduce the charging power of even completely stop charging the home owners Electric Vehicle (EV) by controlling the EV Charger in the home. Other examples of domestic and small commercial loads with significant impact on the grid include for example controlling PV (Photovoltaic cells) Inverters to stop injecting power into the Grid, control the rate of charge of Electrical Vehicle chargers, control when sanitary hot water is produced, control of the HVAC (heating, ventilating, and air conditioning) and heat pumps, control of commercial refrigeration systems, control of pumps for pools, control of water and sewage treatment, control of (backup) battery systems (when to charge or discharge), etc.

Further, each part involved, such as providers of ancillary services, providers of Virtual Power Plants (VPP), system or Grid Operators, Utilities, Energy Suppliers, Aggregators, and domestic or commercial consumers have to remunerated accordingly.

In order to provide proof of remunerable energy control actions, revenue grade metering is used. Utility scale solar parks, windfarms, etc. have such Utility Revenue Grade meters already present on the whole installation. However remotely controlled domestic or commercial appliances and units are installed behind the "Utility Meter" and do not have individual Utility Revenue Grade maters. These units or appliances are connected to "non sealable" parts of the home's or business's electrical wiring system. Tampering of such electrical wiring systems can therefore not be prevented.

In addition, it would not be cost effective to install and operate such a Revenue Grade Electricity Meter (the "Utility Meter") for each domestic or commercial HVAC appliance, each EV Charger unit, Battery Storage System, etc. Installation fee's by utilities are costly and add recurring meter reading and meter operation costs.

It is therefore an objective of the present invention to provide an energy management system, more specifically a Home Energy Management Systems (HEMS) or a Building Energy Management System (BEMS), that do not require sealing of the electrical wiring behind the utility meter and offers the same revenue grade quality metering as the main "Utility Meter". The invention will also provide an all-in-one solution to interface to the local appliances or units to be controlled.

It is also an objective of the present invention to provide an energy management system that is technically compatible and that can provide comparable revenue grade metering data as the revenue grade "Utility Meter" installed on site, to measure the total Load (consumption) of the Home or Building by the grid or meter operator.

It is therefore also an objective of the present invention to provide the grid and system operators, the third-party ancillary services providers, the PP's and aggregators, etc., an established energy management system (HEMS or BEMS) that allows for accurate control whether an individual appliance is generating load, when and how much, and that for example switching the appliance on or off is really happening at the requested moment in time.

It is therefore also an objective of the present invention to provide the grid and system operators, the third-party ancillary services providers, VPP's and aggregators, etc., an established energy metering and energy management system that allows to verify such domestic or commercial, individual units or appliances and to accurately remunerate or bill their domestic or commercial owners on the basis of the use of individual appliances or units.

Further, an objective of the present invention is to provide an energy management system that provides insights to the consumer in real time and on a per day, per week, per month or per year basis of his energy usage and costs and earnings from remunerations of the ("Flexibility") for the total home or business consumption as well as per sub-metered appliances a function of grid load, and optionally directly instructing an individual appliance (e.g., switching on/off).

It is a further object of the present invention to provide a device that helps the user to reduce the power consumption and therefore the value of the bill with up to 12% on an annular basis through behavior change thanks to the provided insights. Savings up to 45% are achieved with "actionable data".

### SUMMARY OF THE INVENTION

In a first aspect, the present invention is directed to an energy management system comprising:
a. at least one submetering and communication module, said module comprising:
   i. a submetering unit capable of metering appliance related power consumption parameters related to an electr(on)ic appliance; and
   ii. a first communication interface for communicating said appliance related power consumption parameters with a server;
b. a first processing unit capable of processing said appliance related power consumption parameters and providing a sub-set of power consumption parameters;
c. a main metering unit capable of metering main power consumption parameters related to a main electricity cable;
d. a second communication interface for communicating said main power consumption parameters with said server,
e. a second processing unit capable of processing said main power consumption parameters and providing a main set of power consumption parameters;
characterized in that it further comprises a third processing unit for correlating said sub-set with said main set and validating the presence of said sub-set in said main set.

In an embodiment of the present invention, such energy management system may further comprise a control unit adapted to communicate with a grid and being able to receive instructions from the grid to instruct the electr(on)ic appliance.

In a second aspect, the present invention is direct to the use of a submetering and communication module in an energy management system as described throughout this text, said module comprising:
a. a submetering unit capable of metering appliance related power consumption parameters related to an electr(on)ic appliance;
b. a first processing unit capable of processing said appliance related power consumption parameters and providing a sub-set of power consumption parameters; and
c. a communication interface for communicating said sub-set with a server.

In a third aspect, the present invention is directed to a virtual power plant comprising an energy management system as described throughout this text.

### BRIEF DESCRIPTION OF THE DRAWINGS:

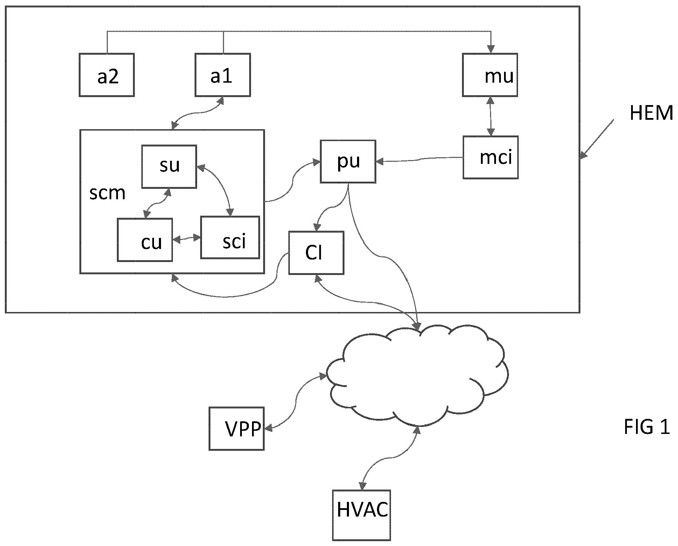

FIG 1 illustrated a configuration of an HEM in accordance with an embodiment of the present invention.

### DESCRIPTION OF THE INVENTION

In a first aspect, the present invention is directed to an energy management system comprising:
a. at least one submetering and communication module, said module comprising:
   i. a submetering unit capable of metering appliance related power consumption parameters related to an electr(on)ic appliance; and
   ii. a first communication interface for communicating said appliance related power consumption parameters with a server;
b. a first processing unit capable of processing said appliance related power consumption parameters and providing a sub-set of power consumption parameters;
c. a main metering unit capable of metering main power consumption parameters related to a main electricity cable;
d. a second communication interface for communicating said main power consumption parameters with said server,
e. a second processing unit capable of processing said main power consumption parameters and providing a main set of power consumption parameters;
characterized in that it further comprises a third processing unit for correlating said sub-set with said main set and validating the presence of said sub-set in said main set.

An energy management system in accordance with the present invention may prevent tampering, because a change in power consumption parameters metered by the main metering unit should be correlated and validated with a change in power consumption parameters metered by a submetering and communication module present in the energy management system. If a change metered by the main metering unit cannot be correlated and validated, tampering may be the case. If a change metered by the main metering unit is indeed correlated with a sub-set and validated, it is guaranteed that the submetering unit is located behind the main metering unit and that the energy is really consumed by an appliance within the energy management system and measured correctly.

In an embodiment of the present invention, the first processing unit capable of processing said appliance related power consumption parameters may be included in the submetering and communication module.

In an embodiment in accordance with the present invention, the first and/or the second and/or the third processing unit may be configured on the server.

In a particular embodiment the first and second, or the first and third, or the second and third, or the first and second and third processing unit may be configured as one unit on the server.

Alternatively, the first processing unit may be configured in the submetering and communication module. In such case, the first processing unit is capable of processing the appliance related power consumption parameters, followed by the first communication interface communicating the sub-set of power consumption parameters to the server.

Or, the second processing unit may be configured in the main metering unit. In such case, the second processing unit is capable of processing the main power consumption parameters, followed by the second communication interface communicating the main set of power consumption parameters to the server.

In an embodiment in accordance with the present invention, the server may contain a database adapted for storing the sub-set and the main set of power consumption parameters and/ or the respective validation. In addition, the database may be adapted for storing the power consumption parameters before processing, i.e., as metered.

Further, the third processing unit, configured on the server or configured separated from said server, is adapted for requesting the respective sub-sets and main set and correlating said sub-set with said main set and validating the presence of said sub-set in said main set.

In an embodiment of the present invention, said first and or second communication interfaces may further comprise a wireless interface wherein the power consumption parameters are transmitted wirelessly to the server.

In another embodiment according to the present invention, the second communication interface for communicating said main power consumption parameters with the server may be configured in the main metering unit. Alternatively, this second communication unit may be a separate unit connected to the main metering unit.

In an embodiment of the present invention, the submetering and communication module may measure and/or communicate the appliance related power consumption parameters at a rate of at least 1 metering per 10 sec, or 1 per second, or 100 per second, or at least 1000 per second.

In a further embodiment of the present invention, as an additional function, the submetering and communication module may further comprise means for applying a signature detection function on the power consumption parameters. In such case, the module may be able to identify appliances in a group of appliances, e.g., within a household, and measure and communicate a plurality of sub-sets of power consumption parameters, each sub-set related to an individual appliance. In such case, the outcome of a signature detection algorithm characterized as an event may comprise a number string comprising peak parameters and/or a transient characteristic.

In accordance with the present invention, the main metering unit may be a revenue grade main metering unit to be installed by a grid operator where the main cable enters inside the house or apartment or building. Or the main metering unit may be revenue grade main metering unit installed in combination with a conventional electromechanical or digital utility meter.

In other cases where a revenue grade meter is not required, any type of main metering unit may be used that is able to measure power consumption parameters over a main electricity cable, for example through a sensor placed on the main electricity cable.

In the context of the present invention a main electricity cable is to be understood as a cable supplying with electrical energy a multitude of appliances such as the electricity cable transporting energy from a main power line to a building, or a house or an apartment.

In accordance with the present invention, the submetering unit comprises means for metering/monitoring power consumption parameters from an appliance through a sensor placed on the power cable of the appliance or on a fuse connected to the appliance.

In the context of the present invention, the sub-set or main set of power consumption parameters is to be understood as a collection of time stamped power consumption parameters over a period of time. Such sub-set or main set may be a data stream over a period of time, or may be data packet representing a period of time. Such data stream or packet may be compressed. Such data stream or packet may include a continuous stream of power consumption parameter or may be limited to data representing a change in energy consumption. Such change in power consumption may be a peak and/or transient changes after the peak and/or typical energy consumption characteristic before and/or after and/or during the peak, or combinations thereof.

Power consumption parameters metered in the context of the present invention may be: current, voltage, cos ϕ (where ϕ is the phase angle between the current and the voltage), real power, reactive power, a normalized real/reactive power, or the like.

Further in the context of the present invention, correlating and validating the presence of the sub-set related to said electr(on)ic appliance in the main set from the main electricity cable is understood as the third processing unit determining whether the power parameter stream from the appliance is related to the power parameter stream from the main electricity cable. In other words, the third processing unit verifies, in case a change in power consumption on the main electricity cable is detected, whether the appliance measured by the submetering unit caused this effect. In case several submetering and communication modules are present in the energy management system, the third processing unit correlates each sub-set from the several appliances with the main set and determines which appliance caused the effect. In case the main metering unit is certified and sealed, i.e. a revenue grade metering unit, by the grid operator and the third processing unit establishes the link between a sub-set from a specific appliance and measured by a submetering unit and a main set from the main metering unit, the sub-set generated by the specific appliance may be considered as validated by the third processing unit such that energy providers are assured they have the correct power consumption parameters from that specific appliance as a basis for billing the consumer.

in addition, in case the main metering unit is sealed and certified, or revenue graded, by validating the sub-set as metered by the submetering unit, the accuracy of the submetering unit is confirmed as well and as a consequence the submetering and communication unit is in fact elevated to a revenue grade meter.

In an embodiment, upon correlating the sub-set and main set, the third processing unit may be adapted to adjust a power consumption parameter in the sub-set (e.g. the amplitude) within accuracy limits (e. g. 1%) as measured by the submetering unit to better correlate with the main-set. This adjustment enhances the accuracy of the sub-set and consequently the validation and corresponding remuneration.

In an embodiment according to the present invention, the third processing unit performs a comparison of the mathematical processing of the power consumption parameters from the appliance and power consumption parameters on the main electricity cable by applying a mathematical function. Such a mathematical function is selected from a group comprising: division, subtraction, or the like.

In a further particular embodiment, the transfer of a respective sub-set or main set to the server is initiated by the first and second processing unit upon detecting of a status change such as switching on/off or a change in energy consumption, resulting in that the efficiency of the system according to the present invention is significantly improved, since only the amount of data necessary for further analysis and processing by the third processing unit is sent to the server and not a continuous data stream.

In an embodiment in accordance with the present invention, the energy management system may provide instructions to modify an appliance's energy usage and/or time period of energy usage as function of predicted and/or real-time grid load, and/or as a function of energy cost, and/or as a function of produced energy. These instructions may be provider to the consumer via software applications such as web-based portal or dashboard or mobile application etc. Alternatively, these instructions may be provided directly to the appliance via the submetering and communication module.

In an embodiment, the energy management system may further comprise a control unit adapted to communicate with the grid and may be able to receive instructions from the grid to instruct the electr(on)ic appliance to modify its energy usage and/or time period of energy usage.

In particular, the submetering and communication module may be adapted via the first communication interface to communicate with a grid and may be able to receive instructions from the grid to instruct the electr(on)ic appliance to modify its energy usage and/or time period of energy usage.

In FIG 1, a configuration of an HEM in accordance with an embodiment of the present invention is illustrated. The total power consumption of a number of appliances (a1, a2) is metered by a revenue grade metering unit (mu). The power consumption of an individual appliance is metered by a submetering and communication module (scm). This module includes a submetering unit (su), a control unit (cu) and a communication interface (sci). Both the communication interfaces (sci, mci) submit the metered data to a server including processing unit (pu). It is understood that this server may also be located in the cloud, or in the submetering and communication module (scm). The processing unit (pu) correlates a sub-set and a main set of power consumption data and validates the presence of the sub-set in the main-set and communicates this to a consumer interface (CI) in order to allow a consumer to follow the behavior of an appliance. This consumer interface may be a mobile appliance or may be present anywhere in the HEM system. The processing unit (pu) communicates this to third parties such as a Virtual Power Plant (VPP) or for example a HVAC service provider as well. The third parties propose instructions to change the appliance's behavior and via the consumer interface (CI) the consumer can approve these instructions or disapprove. In case the consumer approves, the control unit adjust the appliance's behavior which will result in a change of power consumption which is monitored, correlated and validated, and accordingly remunerated.

In a particular embodiment in accordance with the present invention, an energy management system may be provided wherein the submetering unit is capable of metering appliance related power consumption parameters related to the total power consumption of all electr(on)ic appliances present in an household and wherein the main metering unit is capable of metering main power consumption parameters related to a main electricity cable providing energy to a plurality of said households. In such case, the main metering may be applied on grid lever, i.e. on a main cable at an electric energy substation from which electrical energy is distributed to a plurality of households, and the submetering and communication metering unit may be connected such that it is able to measure the total power consumption of an household. This would make it possible to detect non-technical energy losses between the sub-station and the households and would detect tampering.

In a second aspect, the present invention is direct to the use of a submetering and communication module in an energy management system as described throughout this text, said module comprising:
a. a submetering unit capable of metering appliance related power consumption parameters related to an electr(on)ic appliance;
b. a first processing unit capable of processing said appliance related power consumption parameters and providing a sub-set of power consumption parameters; and
c. a communication interface for communicating said sub-set with a server.

In a particular embodiment in accordance with the present invention, the communication interface of said submetering and communication module may comprise a control unit able to communicate with a grid and may be able to receive instructions from the grid to instruct the electr(on)ic appliance to modify its energy usage and/or time period of energy usage.

In a third aspect, the present invention is directed to a virtual power plant comprising an energy management system as described throughout this text. By **implementing** such energy management system into a virtual power plant, predicted and/or real-time electric grid load could be monitored, controlled and managed more efficiently.

An energy management system in accordance with the present invention provide providers of ancillary services and providers of Virtual Power Plants (VPP) proof and revenue grade metering of their control actions on each unit or appliance in order to be remunerated by the Grid or System Operators to whom they provide these ancillary or VPP or aggregation services.

In the context of the present invention, ancillary services refer to functions that help grid operators maintain a reliable electricity system. Ancillary services maintain the proper flow and direction of electricity, address imbalances between supply and demand, and help the system recover after a power system event)

In the context of the present invention, a Virtual Power Plant is a network of decentralized, power generating units such as domestic or commercial photovoltaic systems or wind turbines, utility scale solar or wind parks, domestic, commercial or utility scale battery storage systems. The interconnected units are dispatched through the central control room of the Virtual Power Plant but nonetheless remain independent in their operation and ownership. The objective of a Virtual Power Plant is to relieve the load on the grid by smartly distributing the power generated by the individual units during periods of peak load. Additionally, the combined power generation and power consumption of the networked units in the Virtual Power Plant is traded on the energy exchange.)

Further, an energy management system in accordance with the present invention provides System or Grid Operators, Utilities, Energy Suppliers, Aggregators, etc. proof revenue metered date to remunerate the Home or Business owners because they allow for the flexible control of the energy demand and supply (called "Flexibility") in their premises by controlling their units or appliances.

Further, the energy management system of the present invention provides for accurate verification of the status or mode of operation just prior to the command. As an example, an "Off command" might have been sent to a HVAC unit that was not working. It is important to monitor and log that the command has been received and meter how much the HVAC system contributed to a power reduction. In the case the HVAC unit was not working, it did not contribute to reducing the power consumption and as such it should not be remunerated.

In addition, the energy management system of the present invention enables Users, Home or Business owners to override such controls by configuring settings or preferences, in order e.g., to maintain a certain level of comfort (minimum heating in winter, EV Car needs to charge whatever the cost of the kWh might be, etc.) This will be done on a User Interface of such HEM system (local display or device or cloud software accessible via the Internet through a Browser or smart phone, tablet App.

The energy management system of the present invention further enables a service provider (aggregator, etc.) to interface to such HEMs, BEMS acting as a Proxy of the Home or Business owner. The interface for the service provider will be an API (Application Programming Interface) directly into the HEMs via a local communication port or via an API at the Cloud system of the HEMs provider.

## Claims

1. A energy management system comprising:
a. at least one submetering and communication module, said module comprising:
i. a submetering unit capable of metering appliance related power consumption parameters related to an electr(on)ic appliance;
ii. a first communication interface for communicating said appliance related power consumption parameters with a server;
b. a first processing unit capable of processing said appliance related power consumption parameters and providing a sub-set of power consumption parameters;
c. a main metering unit capable of metering main power consumption parameters related to a main electricity cable;
d. a second communication interface for communicating said main power consumption parameters with said server;
e. a second processing unit capable of processing said main power consumption parameters and providing a main set of power consumption parameters;
**characterized in that** it further comprises a third processing unit for correlating said sub-set with said main set and validating the presence of said sub-set in said main set.

2. An energy management system according to claim 1, wherein the first processing unit capable of processing said appliance related power consumption parameters is included in the submetering and communication module.

3. An energy management system according to claim 1, wherein the first and second and third processing unit are configured as one unit on the server.

4. An energy management system according to any of the above claims, wherein the server contains a database adapted for storing the sub-set and the main set and/or for storing the respective validation.

5. An energy management system according to any of the above claims, wherein the third processing unit is adapted for requesting the respective sub-sets and main set and for correlating said sub-set with said main set and validating the presence of said sub-set in said main set.

6. An energy management system according to claim 5, wherein the main metering unit is a revenue grade meter.

7. An energy management system according to any of the above claims, providing instructions to modify said appliance's energy usage and/or time period of energy usage as a function of predicted and/or real-time electric grid load.

8. An energy management system according to claim 7, further comprising a control unit adapted to communicate with said electric grid and being able to receive instructions from said grid to instruct the electr(on)ic appliance.

9. An energy management system according to claim 8, wherein at least the first communication interface comprises a control unit able to communicate with said electric grid and to receive instructions from the grid to instruct the electr(on)ic appliance.

10. An energy management system according to any of the above claims, wherein the submetering unit is capable of metering appliance related power consumption parameters related to the total power consumption of all electr(on)ic appliances present in an household and wherein the main metering unit is capable of metering main power consumption parameters related to a main electricity cable providing energy to a plurality of said households.

11. Use of a submetering and communication module in an energy management system according to any of the above claims, said module comprising:
a. a submetering unit capable of metering appliance related power consumption parameters related to an electr(on)ic appliance;
b. a first processing unit capable of processing said appliance related power consumption parameters and providing a sub-set of power consumption parameters; and
c. a communication interface for communicating said sub-set with a server.

12. Use of claim 11, wherein the submetering and communication module comprises a control unit able to communicate with an electric grid and to receive instructions from the grid to instruct said electr(on)ic appliance to modify its energy usage and/or time period of energy usage

13. A virtual power plant comprising an energy management system in accordance with any of claims 1 to 10.
